# EUROPEAN PATENT APPLICATION

(11) **EP 3 467 445 A1**
(43) Date of publication of application: **10.04.2019**
(21) Application number: 18155456.9
(22) Date of filing: 07.02.2018
(51) Int. Cl.: G01D 11/30, F16B 3/00

(54) **SYSTEM FOR MOUNTING A VIBRATION TRANSDUCER AT A MACHINE**

(30) Priority: 04.10.2017 US 201715724568
(71) Applicant: Prüftechnik Dieter Busch AG, 85737 Ismaning (DE)
(72) Inventor: Lee, Gregory Eugene, Gardnerville, NV 89410 (US)

(57) **Abstract**

There is provided a system for mounting a vibration transducer at a machine (12), comprising: a mounting pad (20) made from ferrous magnetic material and configured to be mounted at a measurement location of the machine; and a magnetic base (30) comprising a transducer fixation structure (32) configured to releasably fix a vibration transducer unit (10) at the magnet base and a pad engagement structure (50) configured to releasably engage with a mating engagement structure (26) of the mounting pad so as to magnetically fix the magnet base at the mounting pad for vibration measurement. The engagement structure of the mounting pad comprises at least one groove (28) and is asymmetric in a direction orthogonal to the longitudinal direction of the at least one groove in such a manner that engagement of the engagement structure of the mounting pad with the pad engagement structure of the magnet base defines an orientation of the magnet base with regard to the mounting pad in an unambiguous manner so as to ensure proper orientation of the transducer unit with regard to the machine.

## Description

The disclosure relates to a system for mounting a vibration transducer, such as an accelerometer, at a machine.

Vibration data collected with single-axis or multi-axis transducers is an important contribution in machine diagnostics. In order to collect such vibration data, vibration transducers, such as tri-axial accelerometers, have to be permanently or temporarily mounted at the machine. One way to collect vibration data for a machine is to subsequently mount the same transducer at different measurement locations at the machine. In this regard, consistent orientation of the transducer relative to the machine is critical for providing reliable results.

For example, the horizontal, vertical and axial measurement orientation of the transducer has to be consistent from measurement to measurement at the machine. Without consistency of measurement orientation, proper machine diagnostics may become problematic. For example, angular machine misalignment is manifest by vibrating in both a radial direction and axial direction at the running frequency of the machine. If axial vibration is at least half of the radial vibration, angular misalignment is a likely source of the vibration, so that it is imperative that axial and radial orientation of the transducer is the same for all measurements.

It is also important to assure as that each horizontal, vertical and axial measurement maintains the same respective phase orientations along the machine. The phase relationship is particularly important for advanced diagnostic measurement such as Operating Deflection Shape (ODS) and Modal Analysis.

It is an objective of the disclosure to provide for a system for mounting a vibration transducer at a machine which assists proper orientation of the transducer relative to the machine.

According to the disclosure, this object is achieved by a system which comprises a mounting pad made from ferrous material and which is configured to be mounted at a measurement location of the machine; and a magnetic base comprising a transducer fixation structure configured to releasably fix the vibration transducer at the magnet base and a pad engagement structure configured to releasably engage with a mating engagement structure of the mounting pad so as to magnetically fix the magnet base at the mounting pad for vibration measurement. The engagement structure of the mounting pad comprises at least one groove and which is asymmetric in a direction orthogonal to the longitudinal direction of the groove. Such engagement structure ensures that the magnetic base can be mounted at the mounting pad in a fast and easy way for a measurement and can be quickly removed from the mounting pad after the measurement, while the magnetic base can only be oriented in one direction, thereby ensuring proper and reliable orientation of the transducer with regard to the machine during the measurement. Since the magnetic base comprises a transducer fixation structure which is configured to releasably fix the vibration transducer at the magnetic base, the system is a particularly flexible - as opposed to, for example, cases in which the transducer is integrated within the magnetic base.

The engagement structure of the mounting pad may comprise a groove having an asymmetric cross section, which preferably is V-shaped, wherein the angle of two slopes is different. According to one example, the groove with the asymmetric cross section is the only groove of the engagement structure of the mounting pad. According to an alternative example, the engagement structure of the mounting pad comprises two additional grooves, one located at each side of and extending parallel to the groove with the asymmetric cross section which forms a central groove.

According to one example, the engagement structure of the mounting pad may comprise at least three parallel grooves, wherein the distance of the two lateral grooves from the central groove is different. According to another example the engagement structure of the mounting pad may comprise at least two parallel grooves having a different width.

Preferably, the magnetic base comprises a permanent magnet, wherein the pad engagement structure is made of magnetic material. Further, the magnetic base may comprise a central magnetic element and two side magnetic elements arranged laterally with regard to the central magnetic element, wherein the two side magnetic elements have a same magnetic polarity and the central magnetic element has an opposite magnetic polarity. A permanent magnet may be located between each of the side magnetic elements and the central magnetic element. Preferably, the central magnetic element comprises the transducer fixation structure; in particular, the central magnetic element may comprise an opening extending through the central magnetic element for receiving a transducer fixation bolt.

Preferably, the central magnetic element comprises a free end configured to engage with a groove of the engagement structure of the mounting pad. According to one example, each of the side magnetic elements comprises a free end configured to engage with a groove of the engagement structure of the mounting pad. According to an alternative example, each of the side magnetic elements comprises a free end configured to engage with a planar surface of the engagement structure of the mounting pad.

Preferably, the transducer fixation structure of the magnetic base is configured to receive a bolt engaging with the transducer unit. Further, the transducer fixation structure of the magnetic base comprises a thread for engaging a mating thread of the bolt.

The mounting pad typically is made of ferrous stainless steel and may comprise a lanyard hole for fixing an RFID chip at the mounting pad.

These and further objects, features and advantages of the present invention will become apparent from the following description when taken in connection with the accompanying drawings which, for purposes of illustration only, show several embodiments in accordance with the present invention.
Fig. 1 is an exploded view of a first example of a transducer mounting system;
Fig. 2 is a perspective view of the system of Fig. 1 when mounted at a measurement location of a machine;
Fig. 3 is a perspective view of the magnet and the magnetic elements of the magnetic base of the system of Figs. 1 and 2;
Fig. 4 is a perspective view of the central magnetic element of the assembly of Fig. 3;
Fig. 5 is a view like Fig. 1, wherein, however, an alternative example is shown;
Fig. 6 is a view like Fig. 2, wherein, however, the example of Fig. 5 is shown;
Fig. 7 is a perspective view of an alternative example of a transducer mounting system in a detached condition;
Fig. 8 is a view like Fig. 7, wherein, however, a further alternative example is shown;
Fig. 9 is a view like Fig. 8, wherein, however, an alternative example is shown; and
Fig. 10 is a perspective view of a machine at which several mounting pads are fixed.

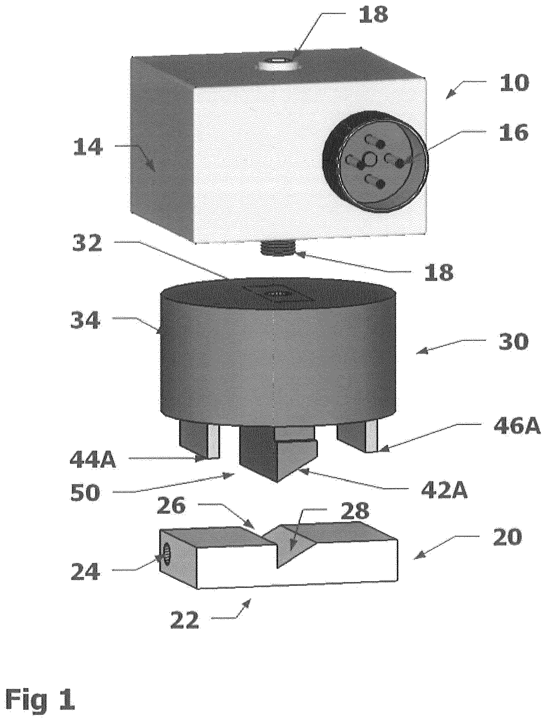

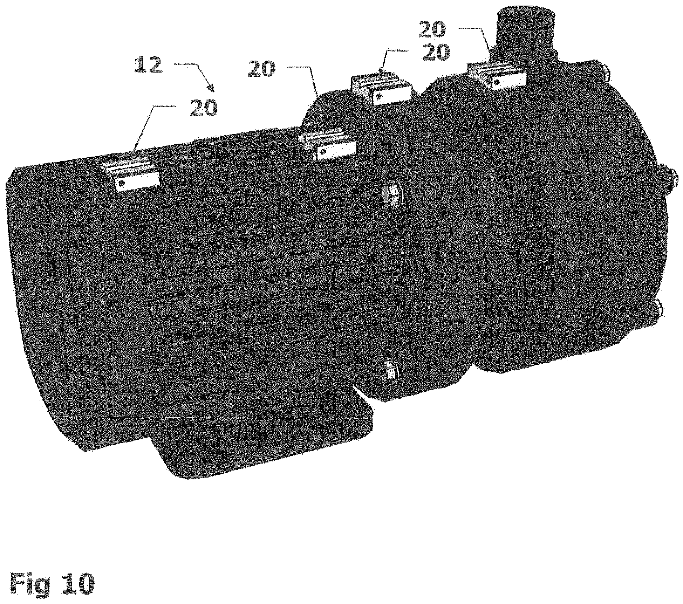

Figs. 1 to 4 relate to a first example of a system for mounting a vibration transducer unit 10 at a machine 12, an example which is shown in Fig. 10. The system comprises a mounting pad 20 and a magnetic base 30. The transducer unit 10 comprises a housing 14 with an electrical connector 16 and an opening for a mounting bolt 18 which extends beyond the housing 14 in order to engage with a mating transducer fixation structure 32 of the magnetic base 30 so as to releasably fix the transducer unit 10 at the magnetic base 30. The magnetic base 30 comprises a housing 34 having an upper surface which carries the housing 14 of the transducer unit 10 when fixed at the magnetic base 30. The transducer unit 10 in some implementations comprises an accelerometer which may be a single-axis accelerometer or which may be a multi-axis accelerometer; in some implementations, the accelerometer is a tri-axial accelerometer for sensing vibrations of the machine 12 in all directions or a 6 axis MEMS.

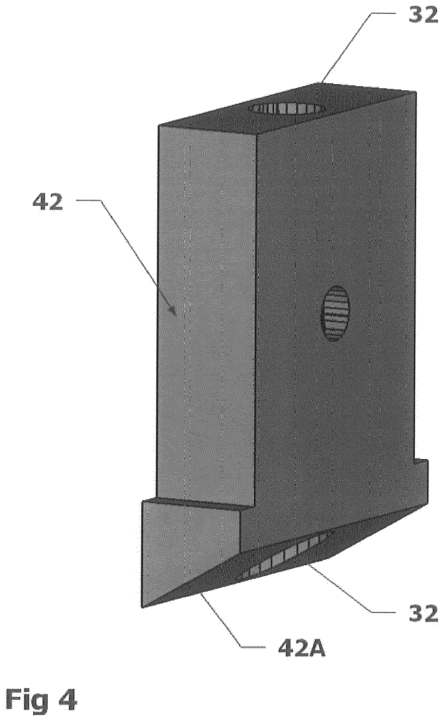

In some implementations, the transducer fixation structure 32 of the magnetic base 30 comprises a vertically extending hole for receiving the mounting bolt (see in particular Fig. 4). According to one example, the hole 32 may comprise a thread for engaging a mating thread 19 of the mounting bolt 18. According to an alternative example, a nut may be provided for engaging with the thread 19 of the mounting bolt 18, which nut may be received in the hole 32 of the magnetic base 30.

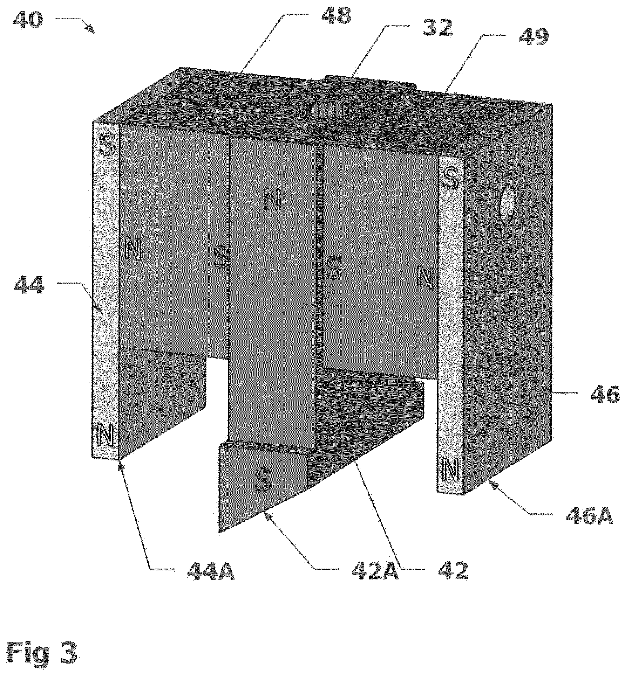

As shown in Fig. 3, the magnetic base 30 comprises an engagement assembly 40 including a central magnetic element 42, two side magnetic elements 44 and 46 arranged laterally with regard to the central magnetic element 42, and a permanent magnet, which is split into a first magnet 48 located between the side magnetic element 44 and the central magnetic element 42 and a second magnet 49 located between the other side magnetic element 46 and the central magnetic element 42. In some implementations, the magnets 48, 49 are rare earth magnets. The magnetic elements 42, 44, 46 are made of magnetic material. The magnets 48, 49 are arranged in such a manner that the two side magnetic elements 44 and 46 have the same magnetic polarity while the central magnetic element 42 has an opposite magnetic polarity. In the example of Fig. 3, the free ends 44A, 46A of the side magnetic elements 44, 46 have an "N"-polarity, while the free end 42A of the central magnetic element 42 has an "S" polarity. Thereby, when the free ends 42A, 44A, 46A of the engagement assembly 40 are brought in contact with a body made of magnetic material, a magnetic circuit will be closed in such a manner that the engagement assembly 40 - and thus the magnetic base 30 - magnetically engages with the magnetic body, which in the present case is the mounting pad 20, as will be explained later in more detail. The free ends 42A, 44A, 46A may be considered as a pad engagement structure 50 of the magnetic base 30.

The magnetic structure of the example of Fig. 3 is similar to the magnetic vibration transducer holder described in U.S. Patent 5,642,089 owned by Pruftechnik.

The mounting pad 20 is made of a magnetic material, preferably ferrous stainless steel, and comprises a lower side 22 which is configured to be fixed to a surface of the machine 12 at the measurement location, preferably with adhesive or metal infused epoxy; however, also other methods are conceivable for fixing the mounting pad 20 to the machine 12.

As shown in Fig. 1, the mounting pad 20 may also comprise a lanyard hole 24 for fixing a RFID chip at the mounting pad 20; such RFID chip may provide for information concerning the measurement location.

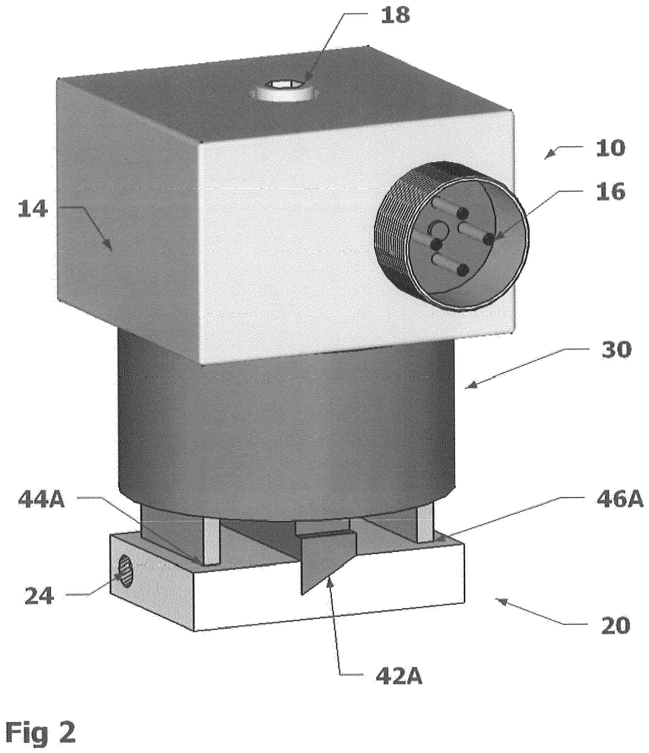

The upper side 26 of the mounting pad 20 is designed as an engagement structure which, in the example of Figs. 1 and 2, comprises a single groove 28 in a planar surface. The cross-section of the grooves 28 is V-shaped, wherein, however, the angles of the two slopes of the groove 28 are different; in the example of Figs. 1 and 2 one of the slopes is substantially vertical while the other slope is at an angle of about 30 degrees relative to the horizontal direction.

The engagement structure 26 of the mounting pad 20 is configured to engage with the mating pad engagement structure 50 of the magnetic base 30. Accordingly, the free end 42A are of the central magnetic element 42 is provided with an angled tip which is shaped so as to fit into the groove 28, i.e. one of its slopes is substantially vertical while the other slope is angled at about 30 degrees with regard to the horizontal plane. The free ends 44A, 46A of the side magnetic elements 44, 46 are flat, so as to engage with the planar surface of the upper side 26 of the mounting pad 20, e.g., the free ends 44A, 46A will touch the planar surface when the tip of the free end 42A of the central magnetic element engages with the groove 28, as is shown in Fig. 2.

Typically, the mounting pad 20 will be fixed at the machine 12 in such orientation that the groove 28 extends along the direction of the shaft of the machine 12, thereby ensuring a desired orientation of the transducer unit 10 with regard to the direction of the shaft of the machine 12. In particular, due to the asymmetry of the engagement structures 26 and 50, inadvertent misalignment of the magnetic base 30 - and thus of the transducer unit 10 - by 180 degrees with regard to the mounting pad 20 is prevented.

As can be seen in Fig. 4, the transducer fixation structure, namely the hole 32 for receiving the mounting bolt 18, is provided in the central magnetic element 42 of the engagement assembly 40 and extends in a vertical direction along the length of the central magnetic element 42.

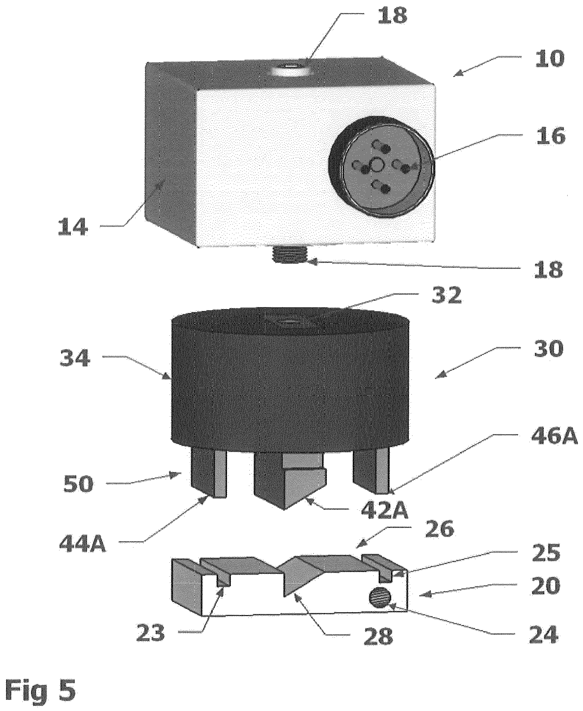

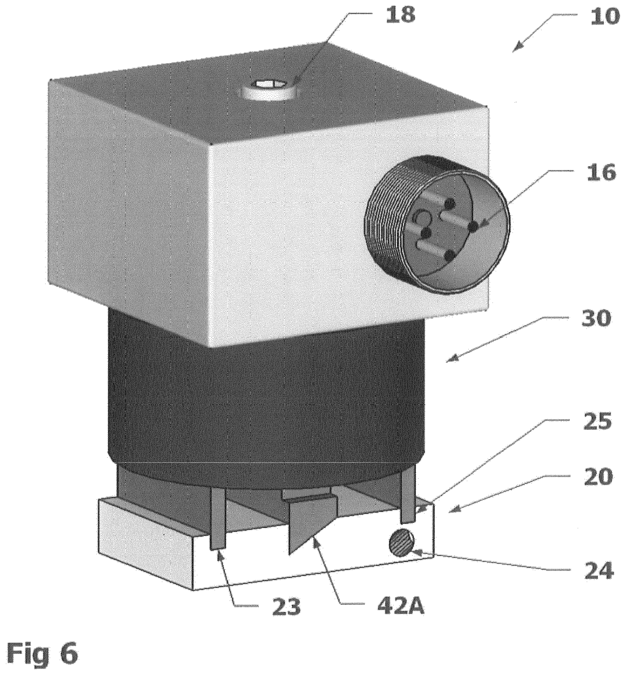

In Figs. 5 and 6 an alternative example of the engagement structures of the magnetic base and the mounting pad is shown, wherein two additional grooves 23 and 25 are provided in parallel to the central groove 28, each at one side of the central groove 28. Accordingly, the free ends 44A, 46A of the side magnetic elements 44 and 46 are slightly extended compared to the embodiment of Figs. 1 to 4, so that the free ends 44A, 46A may engage with the respective lateral groove 23 and 25, respectively, when the tip of the free end 42A of the central magnetic element engages with the central groove 28.

In the example of Figs. 5 and 6, the two lateral grooves 23, 25 have a symmetric cross-section which is the same for both lateral grooves 23, 25; further, the distances between the central groove 28 and the respective lateral groove 23, 25 are the same, e.g., apart from the asymmetric slopes of the central groove 28, the engagement structure 26 of the mounting pad 20 is symmetric. Thus, while the asymmetric central groove 28 provides for the proper orientation of the magnetic base 30 relative to the mounting pad 20, the additional grooves 23, 25 may serve to enhance the mechanical stability of the engagement between the magnetic base 30 and the mounting pad 20.

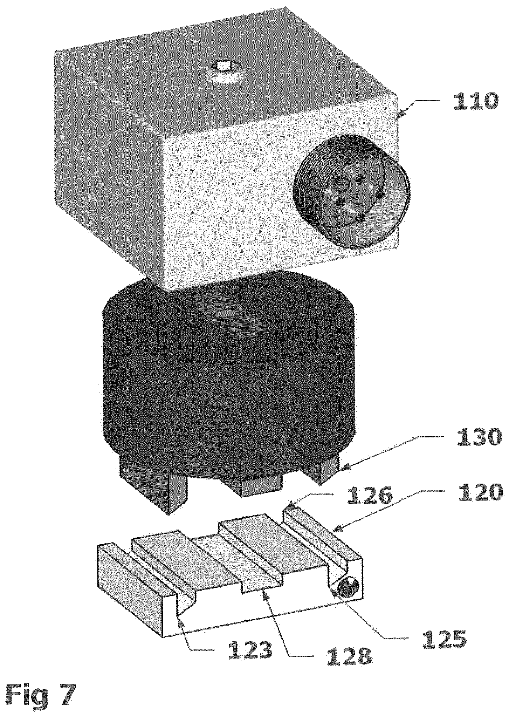

A variant of the example of the engagement structure 26 of Fig. 5 and 6 is shown in Fig. 7, wherein the central groove 128 is provided with a symmetric cross-section, whereas the lateral grooves 123 and 125 are provided with an asymmetric V-shaped cross-section, wherein the two slopes have a different angle; more in detail, the cross-section of the lateral grooves 123, 125 is similar to that of the central groove 28 in Figs. 1 and 5. In the example of Fig. 7, the cross-section of the two lateral grooves 123, 125 is the same and also the distance of the respective lateral groove 123, 125 to the central groove 128 is the same, i.e. the asymmetry in the engagement structure 126 is provided by the asymmetry of the cross-section of the lateral grooves 123, 125.

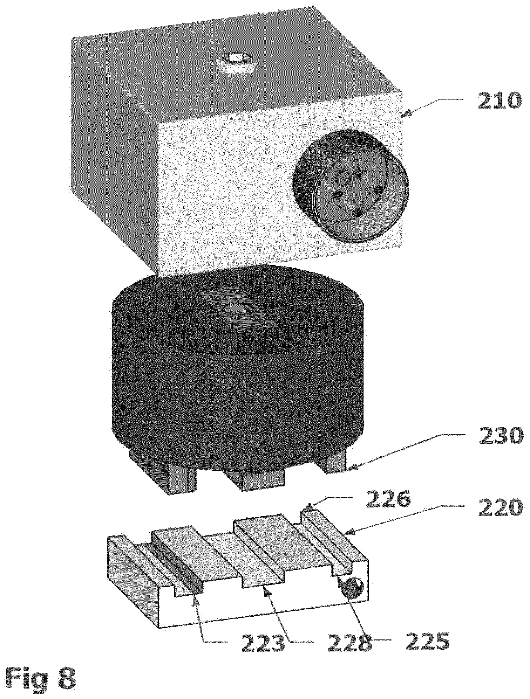

In Fig. 8 another variant of the examples with three parallel grooves is shown, wherein the cross-sections of the grooves 223, 225, 228 are symmetric, while the widths of the two lateral grooves 223, 225 are different (from each other and from the width of the central groove), thereby providing for an asymmetry of the engagement structure 226 of the mounting pad 220 which prevents misalignment of the magnetic base 230 (by 180 degrees) relative to the mounting pad 220. Further, in the example of Fig. 8 the distance between the lateral groove 223 and the central groove 228 is different from the distance between the lateral groove 225 and the central groove 228, thereby introducing an additional asymmetry in the engagement structure 226 for preventing misalignment. In Fig. 8, there is an unequal magnet width. It is to be understood that also only one of these two asymmetries may be employed.

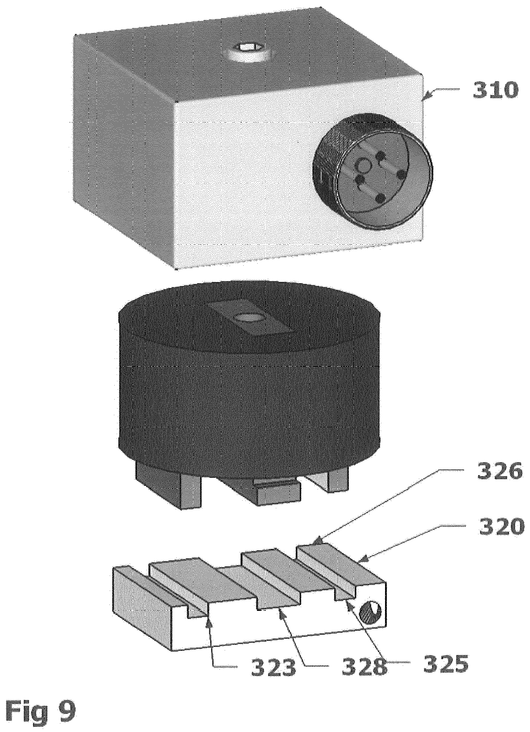

In Fig. 9 another example of an asymmetric engagement structure is shown, wherein the widths of the three grooves 323, 325 and 328 of the mounting pad 320 are different and wherein the lateral spacing between the grooves 328 and 325 and the lateral spacing between the grooves 328 and 323 is different. In Fig. 9 there is an unequal magnet spacing.

While various embodiments in accordance with the present disclosure have been shown and described, it is understood that the disclosure is not limited thereto, and is susceptible to numerous changes and modifications as known to those skilled in the art. Therefore, this disclosure is not limited to the details shown and described herein, and includes all such changes and modifications as encompassed by the scope of the appended claims.

## Claims

1. A system for mounting a vibration transducer at a machine, comprising:
a mounting pad made from ferrous magnetic material and configured to be mounted at a measurement location of the machine; and
a magnetic base comprising a transducer fixation structure configured to releasably fix a vibration transducer unit at the magnetic base and a pad engagement structure configured to releasably engage with a mating engagement structure of the mounting pad so as to magnetically fix the magnetic base at the mounting pad for vibration measurement;
wherein the engagement structure of the mounting pad comprises at least one groove and is asymmetric in a direction orthogonal to the longitudinal direction of the at least one groove in such a manner that engagement of the engagement structure of the mounting pad with the pad engagement structure of the magnet base defines an orientation of the magnetic base with regard to the mounting pad in an unambiguous manner so as to ensure proper orientation of the transducer unit with regard to the machine.

2. The system of claim 1, wherein the engagement structure of the mounting pad comprises a groove having an asymmetric cross section.

3. The system of claim 2, wherein the cross section of the groove is V-shaped, and wherein the angle of two slopes is different.

4. The system of one of claims 2 and 3, wherein the groove with the asymmetric cross section is the only groove of the engagement structure of the mounting pad.

5. The system of one of claims 2 and 3, wherein the engagement structure of the mounting pad comprises two additional grooves, one located at each side of and extending parallel to the groove with the asymmetric cross section which forms a central groove.

6. The system of one of claims 1 to 3, wherein the engagement structure of the mounting pad comprises at least three parallel grooves, and wherein the distance of the two lateral grooves from the central groove is different.

7. The system of one of claims 1 to 3, wherein the engagement structure of the mounting pad comprises at least two parallel grooves having a different width.

8. The system of one of the preceding claims , wherein the magnetic base comprises a permanent magnet and wherein the pad engagement structure is made of magnetic material.

9. The system of claim 8, wherein the magnetic base is ferrous and comprises a central magnetic element and two side magnetic elements arranged laterally with regard to the central magnetic element, wherein the two side magnetic elements have a same magnetic polarity and the central magnetic element has an opposite magnetic polarity.

10. The system of claim 9, wherein a permanent magnet is located between each of the side magnetic elements and the central magnetic element.

11. The system of one of claims 9 and 10, wherein the central magnetic element comprises an opening extending through the central magnetic element for receiving a transducer fixation bolt.

12. The system of one of claims 9 to 11, wherein the central magnetic element comprises a free end configured to engage with a groove of the engagement structure of the mounting pad.

13. The system of one of claims 9 to 12, wherein each of the side magnetic elements comprises a free end configured to engage with a groove or a planar surface of the engagement structure of the mounting pad.

14. The system of one of the preceding claims, wherein the transducer fixation structure of the magnetic base is configured to receive a bolt engaging with the transducer unit, and wherein the transducer fixation structure of the magnetic base comprises a thread for engaging a mating thread of the bolt.

15. A system for vibration measurement at a machine, comprising:
a mounting pad made from ferrous magnetic material and configured to be mounted at a measurement location of the machine;
a vibration transducer unit; and
a magnetic base comprising a transducer fixation structure configured to releasably fix the vibration transducer unit at the magnetic base and a pad engagement structure configured to releasably engage with a mating engagement structure of the mounting pad so as to magnetically fix the magnetic base at the mounting pad for vibration measurement;
wherein the engagement structure of the mounting pad comprises at least one groove and is asymmetric in a direction orthogonal to the longitudinal direction of the at least one groove in such a manner that engagement of the engagement structure of the mounting pad with the pad engagement structure of the magnetic base defines an orientation of the magnetic base with regard to the mounting pad in an unambiguous manner so as to ensure proper orientation of the transducer unit with regard to the machine.
